Europäisches Patentamt

European Patent Office

Office européen des brevets

(11) Publication number: **0 278 525 B1**

# EUROPEAN PATENT SPECIFICATION

(45) Date of publication of patent specification: **06.05.92**  (51) Int. Cl.⁵: **G11B 23/18**, G09B 5/04

(21) Application number: **88102111.7**

(22) Date of filing: **12.02.88**

(54) **Information recording medium and device for preparing the same.**

(30) Priority: **23.12.87 JP 323671/87**
**12.02.87 JP 28299/87**
**02.02.88 JP 21269/88**

(43) Date of publication of application:
**17.08.88 Bulletin 88/33**

(45) Publication of the grant of the patent:
**06.05.92 Bulletin 92/19**

(84) Designated Contracting States:
**DE FR GB**

(56) References cited:
**EP-A- 0 276 720**
**FR-A- 2 379 875**
**GB-A- 1 548 086**
**GB-A- 2 167 226**

(73) Proprietor: **Murakami, Miki**
**No. 9-4, Nishinogawa 1-chome**
**Komae-shi Tokyo(JP)**

(72) Inventor: **Murakami, Miki**
**No. 9-4, Nishinogawa 1-chome**
**Komae-shi Tokyo(JP)**

(74) Representative: **Ebbinghaus, Dieter et al**
**Patentanwälte v. Füner, Ebbinghaus, Finck**
**Mariahilfplatz 2 & 3**
**W-8000 München 90(DE)**

## Description

The invention relates to an information recording medium having a first and a second track.

FR-A-2 379 875 discloses an information recording medium having the form of a cassette tape. Recorded thereon are in a first track a number of questions followed by a respective response in a second track.

EP-A-0 276 720 further discloses an information recording medium also containing discontinuous data in both tracks.

An information recording medium, however, would be convenient allowing continuous resumption of an information and allowing it to the user to listen or not to listen an explanation related thereto. For instance, it would be convenient to have music recorded in one track of the recording medium and explanation related thereto which the user could listen if interested or, if not, continue to hear the music. Another example would be a continuous text in one track and explanation thereto in another track.

In order to satisfy such need the invention provides for an information recording medium having a first and a second track, a continuous first information comprising individual blocks of information being recorded on said first track, a discontinuous second information corresponding to individual blocks of said first information and having definite timewise position relations to said corresponding blocks of said first information being recorded on said second track in a timeflow direction reverse to that of the first information, wherein the end points of individual blocks of said second information coincide with the start points of corresponding individual blocks of said first information.

With the recording medium of the present invention it is possible to listen a continuous information like music or a text and to switch the recording medium into the other direction at the end of a block of the first information in order to listen an explanation thereof. It is also possible to first listen the explanation and then switch over to the continuous information. Otherwise if the user wishes to listen the complete continuous information he may decide not to switch over into the other track running in the opposite direction.

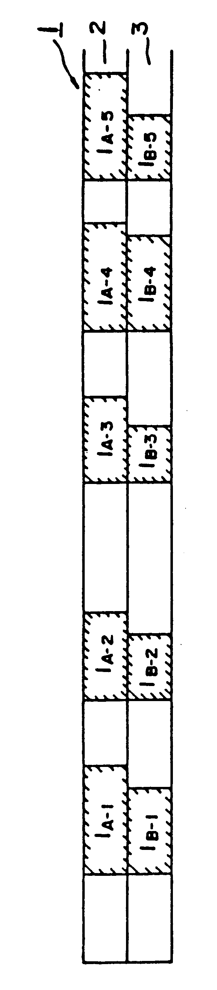

The invention is further described with reference to the attached drawing which shows a magnetic tape according to the present invention.

The drawing shows as an example of an information recording medium a cassette tape 1 having thereon an A track 2 and a B track 3. On the A track 2 a first, continuous information is recorded being divided into a plurality of blocks $I_{A-1}$, $I_{A-2}$, $I_{A-3}$, $I_{A-4}$ and $I_{A-5}$. On the B track 3 as second, discontinuous information explanation in individual blocks $I_{B-1}$, $I_{B-2}$, $I_{B-3}$, $I_{B-4}$ and $I_{B-5}$ are recorded respectively corresponding to the individual blocks $I_{A-1}$, $I_{A-2}$, $I_{A-3}$, $I_{A-4}$, and $I_{A-5}$ of the first information. The flow direction of the second, discontinuous information is opposite to the flow direction of the continuous, first information. If in the drawing the tape 1 in the reproduction mode moves to the left the information blocks $I_{A-1}$... may be listened. At the end of each block the tape may be reversed for listening the second information related thereto. It is also possible, to initially reproduce the second information as a preparation step for listening the first information. For example, the first information may be a music melody whereas the second one is the text of the music.

Accordingly, initially the text may be heard in order to listen or to sing the melody corresponding to the words, that is, to memorize the song while learning the words.

## Claims

1. An information recording medium (1) having a first and a second track (2, 3), a continuous first information ($I_A$) comprising individual blocks of information being recorded on said first track (2), a discontinuous second information ($I_B$) corresponding to individual blocks of said first information ($I_A$) and having definite timewise position relations to said corresponding blocks of said first information ($I_A$) being recorded on said second track (3) in a timeflow direction reverse to that of the first information ($I_A$), wherein the end points of individual blocks of said second information ($I_B$) coincide with the start points of corresponding individual blocks of said first information ($I_A$).

## Revendications

1. Un milieu (1) d'enregistrement d'informations comprenant une première et une deuxième piste (2, 3), une première information continue ($I_A$) comprenant des blocs individuels d'information étant enregistrée sur ladite première piste (2), une deuxième information discontinue ($I_B$), correspondant à des blocs individuels de ladite première information ($I_A$) et présentant des relations définies de position dans le temps avec lesdits blocs correspondants de ladite première information (L), étant enregistrée sur ladite deuxième piste (3) dans un sens de passage inverse, en déroulement, de celui de la première information (IA), dans lequel les points de fin de blocs individuels de ladite deuxième information ($I_B$) coïncident avec les points de début des blocs individuels correspondants de ladite première information ($I_A$).

**Patentansprüche**

1.  Informations-Aufzeichnungsmedium (1) mit einer ersten und einer zweiten Spur (2, 3), einer ersten, einzelne Informationsblöcke umfassenden kontinuierlichen Information ($I_A$), die auf der ersten Spur (2) aufgezeichnet ist, einer zweiten, diskontinuierlichen Information ($I_B$), die den einzelnen Blöcken der ersten Information ($I_A$) entspricht und definierte zeitliche Positionsbeziehungen zu entsprechenden Blöcken der ersten Information ($I_A$) aufweist und auf der zweiten Spur (3) in einer Zeitflußrichtung entgegengesetzt der der ersten Information ($I_A$) aufgezeichnet ist, wobei die Endpunkte einzelner Blöcke der zweiten Information ($I_B$) mit den Startpunkten entsprechender einzelner Blöcke der ersten Information ($I_A$) zusammenfallen.